# FASCICULE DE BREVET EUROPEEN

(11) **EP 1 998 173 B1**
(45) Date de publication et mention de la délivrance du brevet: **20.05.2015**
(21) Numéro de dépôt: 08157128.3
(22) Date de dépôt: 28.05.2008
(51) Int. Cl.: G01N 27/90

(54) **Dispositif de contrôle non destructif, par courants de Foucault d'un trou pratiqué dans une pièce conductrice.**
Nicht-destruktive Kontrollvorrichtung durch Wirbelströme eines in einem leitenden Werkstück ausgeführten Lochs
Device for non-destructive testing of a hole made in a conductive part using Eddy currents.

(30) Priorité: 29.05.2007 FR 0755290
(43) Date de publication de la demande: 03.12.2008
(73) Titulaire: SNECMA, 75015 Paris (FR)
(72) Inventeur: Cabanis, Patrick, 77390, OZOUER LE VOULGIS (FR); Cheynet, Sandra, 91220, LE PLESSIS PATE (FR); Gaisnon, Patrick, 77130, CANNES ECLUSE (FR); Le Corre, Christian, 77310, SAINT FARGEAU PONT THIERRY (FR)
(74) Mandataire: Intès, Didier Gérard André

(56) Documents cités:
- EP-A- 0 577 244
- EP-A- 1 605 259
- FR-A- 2 871 568
- US-A- 5 781 007

## Description

L'invention se rapporte à un dispositif de contrôle non destructif, par courants de Foucault, d'un trou pratiqué dans une pièce conductrice, notamment métallique et plus particulièrement adapté à explorer ledit trou par brochage, sans rotation, ce trou étant non rectiligne et/ou à section non circulaire. A titre d'exemple non limitatif, l'invention permet le contrôle de trous de refroidissement ou de prélèvement d'air pratiqués dans un disque de rotor de turbomachine.

Dans un disque de turboréacteur tel que celui d'une turbine haute pression, il existe des trous courbes s'étendant entre une face du disque et les fonds des alvéoles tangentielles retenant les aubes. Ces trous permettent d'injecter de l'air de refroidissement. Un agencement semblable est prévu sur certains disques du compresseur haute pression, pour effectuer des prélèvements d'air.

En outre, ces trous n'ont généralement pas une section circulaire ; ils ont le plus souvent une section elliptique. Classiquement, ces trous font l'objet d'un contrôle par courants de Foucault, nécessitant d'introduire plusieurs sondes adaptées et de procéder, chaque fois, à un brochage pour scruter la surface intérieure du trou, par bandes longitudinales parallèles. Le but du contrôle par courants de Foucault est de repérer les anomalies de l'état de surface du trou et notamment la formation de petites criques, en surface ou sous-jacentes. Le contact entre la sonde et la surface du trou doit être maintenu pendant le brochage pour que le contrôle soit fiable. Or, ces trous peuvent avoir une section évolutive, c'est-à-dire non rigoureusement constante sur leur longueur et même présenter des variations de courbure locales.

EP-A-1 605 259 décrit un dispositif pour l'exploration d'une surface relativement plane d'une cavité. Selon ce document, un chariot roulant porte, entre autres, un capteur à courants de Foucault.

Un autre système connu comporte un jeu de plusieurs bras courbes, chacun portant une sonde renfermant un capteur à courants de Foucault. La sonde présente une extrémité fendue, élastiquement souple, renfermant le capteur. Ce système manque de sensibilité et de précision car la surface scrutée au cours du brochage est trop importante et surtout parce qu'on n'est pas certain d'obtenir un bon contact entre la surface extérieure de la sonde, au point optimal de celle-ci et la surface interne du trou.

L'invention propose un perfectionnement à ce type de système.

Plus particulièrement, l'invention concerne un dispositif de contrôle non destructif par courants de Foucault d'un trou pratiqué dans une pièce conductrice, selon la revendication 1, du type adapté à explorer ledit trou par brochage sans rotation, comportant un manche conformé et dimensionné pour pouvoir être engagé dans ledit trou, comportant :
- au moins un bras articulé au voisinage d'une extrémité dudit manche et comportant une face latérale extérieure courbe,
- un capteur à courants de Foucault incrusté dans ledit bras au voisinage de ladite face latérale extérieure courbe, et
- un moyen élastique pour solliciter ledit bras articulé vers l'extérieur, l'agencement étant tel que ledit bras articulé soit en contact avec la surface intérieure du trou, ledit contact se faisant au voisinage de la face extérieure courbe et dudit capteur,
caractérisé en ce que ledit manche porte au moins deux bras articulés précités, en opposition.

Pour protéger le capteur, il est avantageux de le recouvrir de résine. Dans ces conditions, c'est la résine durcie qui entre en contact avec la surface intérieure du trou.

Pour le contrôle d'un trou curviligne, le manche est courbe et la courbure du manche correspond à celle du trou. De préférence, le manche porte au moins deux bras articulés précités, en opposition.

De préférence, un tel manche portera plusieurs paires de bras articulés précités.

Selon un mode de réalisation, chaque bras est monté articulé par un axe à un support solidaire dudit manche et un ressort est installé entre ce manche ou support et ledit bras, pour le repousser vers l'extérieur.

Pour un trou à section non circulaire, notamment un trou elliptique, les bras d'une telle paire sont espacés d'une distance correspondant à la largeur du trou entre les capteurs considérés.

Avantageusement, le dispositif est complété par une pièce de guidage avant ayant un contour correspondant à la section du trou. Cette pièce de guidage est placée à l'extrémité du manche. Il est aussi avantageux qu'une pièce de guidage arrière soit fixée au manche, à l'arrière du ou des bras, la pièce de guidage arrière ayant un contour correspondant à la section du trou.

Pour le contrôle d'un trou d'une courbure et/ou d'une section prédéterminée, on aura généralement recours à plusieurs dispositifs de contrôle du type décrit ci-dessus. Les dispositifs de contrôle d'un même jeu sont semblables (notamment en ce qui concerne les manches) mais différents les uns des autres par les positions des bras articulés à leurs extrémités. Les capteurs portés par tous les bras des différents dispositifs sont destinés à être déplacés en regard de génératrices choisies du trou, respectivement, de façon à pouvoir scruter l'état de surface du trou, par bandes étroites parallèles.

L'invention sera mieux comprise et d'autres avantages de celle-ci apparaîtront mieux à la lumière de la description qui va suivre de plusieurs dispositifs de contrôle conformes à son principe, donnée uniquement à titre d'exemple et faite en référence aux dessins annexés dans lesquels :
- la figure 1 est une vue générale en perspective d'un dispositif de contrôle conforme à l'invention ;
- la figure 1A est une vue arrière de détail illustrant la pièce de guidage avant de la figure 1 ;
- la figure 2 est une vue de détail à plus grande échelle de l'un des bras portant un capteur, du dispositif de la figure 1 ; et
- les figures 3 à 5 sont des vues de détail de plusieurs dispositifs semblables à celui de la figure 1 réunissant dans leur ensemble un certain nombre de capteurs positionnés en des emplacements différents.

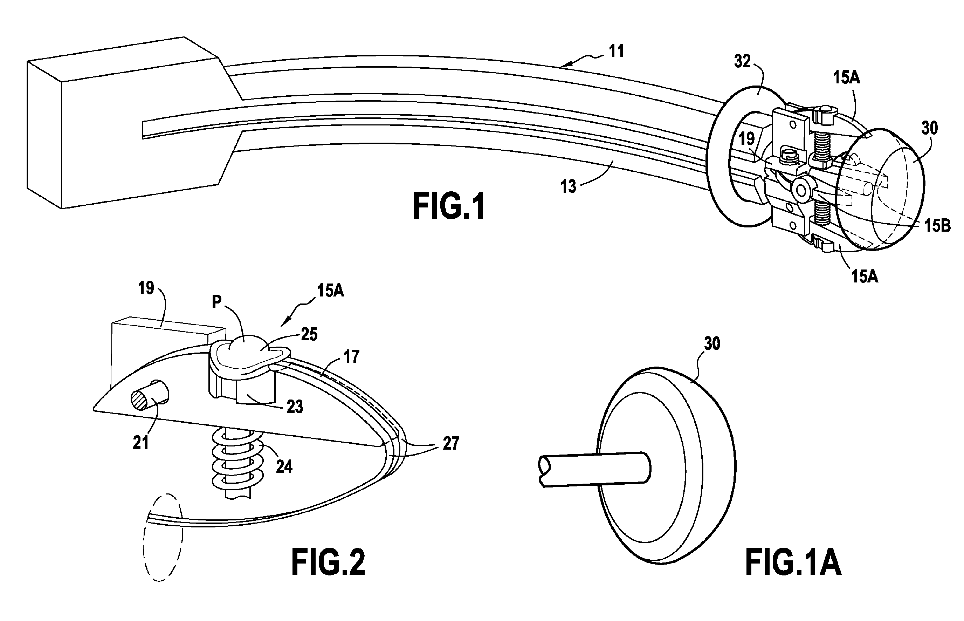

Le dispositif de contrôle 11 représenté sur les figures 1 et 2 est conçu pour scruter au moins une bande étroite de la surface interne d'un trou 12 pratiqué dans une pièce conductrice, ici métallique. Selon l'exemple, ce trou présente un rayon de courbure constant et un contour non circulaire, ici elliptique. On peut rencontrer ce type de trou sur un disque de turbine haute pression d'un turboréacteur. Le trou s'étend entre un côté du disque et le fond d'une alvéole tangentielle retenant un pied d'aube. De l'air est injecté dans un tel trou pour refroidir le pied d'aube. L'invention permet le contrôle non destructif, par courants de Foucault, de la surface d'un tel trou.

Bien entendu, le dispositif de contrôle selon l'invention peut convenir ou être adapté pour scruter, par brochage, l'état de surface (voire la structure du matériau au voisinage de cette surface, sur une certaine profondeur) de n'importe quel trou pratiqué dans une pièce conductrice.

Le dispositif comporte un manche 13 conformé et dimensionné pour pouvoir être engagé dans le trou. Le manche peut par exemple être monté à l'extrémité d'un bras de robot programmé pour lui faire décrire une trajectoire appropriée, par exemple le long de sa propre ligne de courbure. Le manche doit avoir une section inférieure à celle du trou pour pouvoir y être engagé sans entrer en contact avec sa surface interne. Comme représenté, le manche est courbe et cette courbure correspond à celle du trou. Par exemple, s'il s'agit d'un trou courbe à rayon de courbure constant, le manche a un rayon de courbure sensiblement égal à celui du trou.

Le manche 13 porte, au voisinage de son extrémité, au moins un bras articulé. Ce bras comporte une face latérale extérieure courbe 17. De préférence, le manche porte au moins deux bras articulés 15A précités, en opposition. Plus précisément, les bras sont positionnés de façon que les points de contact avec la surface du trou soient sensiblement symétriques par rapport au centre de la section du trou. Selon un mode de réalisation préféré, le manche porte plusieurs paires de bras articulés 15A, 15B précités. Dans les exemples décrits, un tel manche comporte deux paires de bras articulés.

Comme représenté sur le dessin, le manche comporte un support 19 à son extrémité et chaque bras est monté articulé par un axe 21, sur ce support. L'orientation de l'axe est telle que le bras 15A, 15B pivote dans un plan sensiblement perpendiculaire à la surface à scruter et passant par le point de contact entre la face latérale extérieure courbe du bras et ladite surface.

Un capteur à courants de Foucault 23 est incrusté dans le bras au voisinage de la face latérale extérieure courbe 17 de celui-ci et plus particulièrement au voisinage du point de contact P prévu entre cette face latérale et la surface à contrôler. Chaque capteur est recouvert d'une goutte de résine 25 assurant sa protection. De bonnes performances anti-usure sont obtenues en chargeant la résine par des matériaux tels que le carbure de silicium, l'alumine ou la céramique.

De plus, un moyen élastique est prévu pour solliciter chaque bras articulé vers l'extérieur de façon à ce que ce bras soit en contact avec la surface intérieure du trou, le point de contact P se situant au voisinage du capteur. Dans l'exemple, un ressort 24 est monté entre le support situé à l'extrémité du manche et le bras articulé. Selon les cas et notamment selon la place disponible, le ressort peut être un simple ressort hélicoïdal sollicité en compression entre le support et le bras ou bien un ressort spiralé à tige. Les fils électriques 27 reliés au capteur longent la surface du bras et s'engagent dans un canal du manche.

Le dispositif est complété par au moins une pièce de guidage permettant de positionner de façon plus précise les capteurs par rapport à la section du trou. On distingue ainsi une pièce de guidage avant 30 qui est placée à l'extrémité du manche. Cette pièce de guidage a un contour correspondant à la section du trou, c'est-à-dire, selon l'exemple, elliptique. Sa section s'élargit d'avant en arrière jusqu'à atteindre une valeur proche de celle du trou.

On prévoit aussi une pièce de guidage arrière 32 qui est fixée au manche à l'arrière de l'ensemble des bras pivotants. Cette pièce de guidage arrière a aussi un contour correspondant à la section du trou. Ainsi, une fois les pièces de guidage engagées dans le trou, chaque bras pivotant est assujetti à suivre une ligne prédéterminée s'étendant suivant la longueur de ce trou, pour que le capteur 23 correspondant puisse scruter l'état de surface d'une bande étroite de part et d'autre de cette ligne de contact.

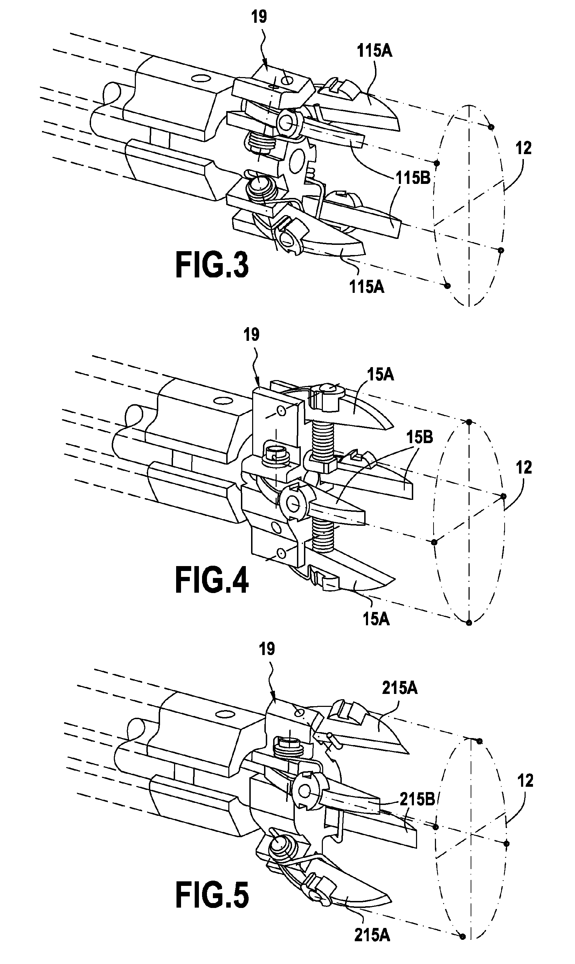

Comme on le voit sur les figures 3 à 5, un appareillage de contrôle complet par courants de Foucault comporte plusieurs dispositifs de contrôle conformes à la description qui précède mais se différenciant les uns des autres par les positions des bras articulés (15A, 115A, 215A - 15B, 115B, 215B) qu'ils portent, par rapport à la section du trou 12. Ainsi, en procédant à autant de brochages qu'on dispose de dispositifs de contrôle, on parvient à relever un ensemble de signaux représentatifs de l'état de surface d'autant de bandes parallèles et adjacentes de la surface interne du trou. L'ensemble de ces informations permet d'obtenir un relevé précis d'éventuels défauts à la surface interne du trou ou légèrement sous-jacents à celui-ci.

L'invention s'applique aux pièces en matériau composite à base carbone, conducteur.

## Revendications

1. Dispositif de contrôle non destructif par courants de Foucault d'un trou pratiqué dans une pièce conductrice, du type adapté à explorer ledit trou par brochage sans rotation, comportant un manche (13) conformé et dimensionné pour pouvoir être engagé dans ledit trou, comportant :
- au moins un bras articulé (15A) au voisinage d'une extrémité dudit manche et comportant une face latérale extérieure courbe,
- un capteur à courants de Foucault (23) incrusté dans ledit bras au voisinage de ladite face latérale extérieure courbe, et
- un moyen élastique (24) pour solliciter ledit bras articulé vers l'extérieur, l'agencement étant tel que ledit bras articulé soit en contact avec la surface intérieure du trou, ledit contact se faisant au voisinage de la face extérieure courbe et dudit capteur,
**caractérisé en ce que** ledit manche porte au moins deux bras articulés (15A) précités, en opposition.

2. Dispositif selon la revendication 1, pour le contrôle d'un trou curviligne, **caractérisé en ce que** ledit manche (13) est courbe, avec une courbure correspondant à celle du trou.

3. Dispositif selon la revendication 1, **caractérisé en ce que** ledit manche porte plusieurs paires de bras (15A, 15B) articulés précités.

4. Dispositif selon l'une des revendications précédentes, **caractérisé en ce que** le ou chaque bras est monté articulé par un axe (21) à un support (19) solidaire dudit manche et **en ce qu'**un ressort (24) est installé entre ledit manche et ledit bras, pour le repousser vers l'extérieur.

5. Dispositif selon l'une des revendications précédentes, **caractérisé en ce que** le ou chaque capteur (23) est recouvert de résine (25).

6. Dispositif selon l'une des revendications précédentes, **caractérisé en ce qu'**une pièce de guidage avant (30) est placée à l'extrémité dudit manche, ladite pièce de guidage avant ayant un contour correspondant à la section dudit trou.

7. Dispositif selon l'une des revendications précédentes, **caractérisé en ce qu'**une pièce de guidage arrière (32) est fixée au dit manche, à l'arrière du ou desdits bras, ladite pièce de guidage arrière ayant un contour correspondant à la section dudit trou.

8. Appareillage de contrôle par courants de Foucault d'un trou pratiqué dans une pièce conductrice, **caractérisé en ce qu'**il comporte plusieurs dispositifs de contrôle selon l'une des revendications précédentes, se différenciant les uns des autres par les positions des bras articulés qu'ils portent, par rapport à la section du trou.

## Patentansprüche

1. Vorrichtung zur zerstörungsfreien Wirbelstromprüfung eines in einem leitenden Teil ausgebildeten Lochs, vom Typ, der dazu ausgelegt ist, das Loch durch Durchziehen ohne Drehen abzutasten, mit einem Griff (13), der derart geformt und bemessen ist, dass er in das Loch eingesteckt werden kann, umfassend:
- wenigstens einen Gelenkarm (15A) in der Nähe eines Endes des Griffs und mit einer gekrümmten äußeren Seitenfläche,
- einen Wirbelstromsensor (23), der in den Arm in der Nähe der gekrümmten äußeren Seitenfläche eingelassen ist, und
- ein Federmittel (24), um den Gelenkarm nach außen zu belasten, wobei die Anordnung derart ist, dass der Gelenkarm mit der Innenfläche des Lochs in Kontakt ist, wobei der Kontakt in der Nähe der gekrümmten Außenfläche und des Sensors stattfindet,
**dadurch gekennzeichnet, dass** der Griff wenigstens zwei vorgenannte Gelenkarme (15A) entgegengesetzt trägt.

2. Vorrichtung nach Anspruch 1, für die Prüfung eines krummlinigen Lochs, **dadurch gekennzeichnet, dass** der Griff (13) gekrümmt ist, mit einer Krümmung, die derjenigen des Lochs entspricht.

3. Vorrichtung nach Anspruch 1, **dadurch gekennzeichnet, dass** der Griff mehrere Paare von vorgenannten Gelenkarmen (15A, 15B) trägt.

4. Vorrichtung nach einem der vorhergehenden Ansprüche, **dadurch gekennzeichnet, dass** der oder jeder Arm über eine Achse (21) an einem mit dem Griff fest verbundenen Träger (19) gelenkig angebracht ist und dass eine Feder (24) zwischen dem Griff und dem Arm angebracht ist, um ihn nach außen wegzudrücken.

5. Vorrichtung nach einem der vorhergehenden Ansprüche, **dadurch gekennzeichnet, dass** der oder jeder Sensor (23) mit Harz (25) überzogen ist.

6. Vorrichtung nach einem der vorhergehenden Ansprüche, **dadurch gekennzeichnet, dass** ein vorderes Führungsteil (30) am Endes des Griffs angeordnet ist, wobei das vordere Führungsteil eine dem Querschnitt des Lochs entsprechende Kontur aufweist.

7. Vorrichtung nach einem der vorhergehenden Ansprüche, **dadurch gekennzeichnet, dass** ein hinteres Führungsteil (32) an dem Griff, hinter dem oder den Armen befestigt ist, wobei das hintere Führungsteil eine dem Querschnitt des Lochs entsprechende Kontur aufweist.

8. Gerät zur Wirbelstromprüfung eines in einem leitenden Teil ausgebildeten Lochs, **dadurch gekennzeichnet, dass** es mehrere Prüfvorrichtungen nach einem der vorhergehenden Ansprüche umfasst, die sich durch die Positionen der Gelenkarme, die sie tragen, in Bezug auf den Querschnitt der Lochs voneinander unterscheiden.

## Claims

1. A device for non-destruction eddy current inspection of a hole formed in a conductive part, the device being of the type suitable for exploring said hole by broaching without rotation, comprising a stick (13) shaped and dimensioned to be capable of being engaged in said hole, and comprising:
· at least one hinged arm (15A) in the vicinity of one end of said stick and including a curved outside face;
· an eddy current sensor (23) embedded in said arm in the vicinity of said curved outside face; and
· resilient means (24) for urging said hinged arm outwards, the arrangement being such that said hinged arm is in sliding contact with the inside surface of the hole, said sliding contact taking place in the vicinity of the curved outside face of said sensor,
**characterized in that** said stick carries at least two of said hinged arms (15A), in opposition.

2. A device according to claim 1, for inspecting a curvilinear hole, **characterized in that** said stick (13) is curved, with curvature corresponding to the curvature of the hole.

3. A device according to claim 1, **characterized in that** said stick carries a plurality of pairs (15A, 15B) of said hinged arms.

4. A device according to any one of the preceding claims, **characterized in that** the or each arm is hinged on a pin (21) to a support (19) secured to said stick, and **in that** a spring (24) is installed between said stick and said arm, in order to push the arm outwards.

5. A device according to any one of the preceding claims, **characterized in that** the or each sensor (23) is covered in resin (25).

6. A device according to any one of the preceding claims, **characterized in that** a front guide part (30) is placed at the end of said stick, said guide part having an outline corresponding to the section of said hole.

7. A device according to any one of the preceding claims, **characterized in that** a rear guide part (32) is fastened to said stick, behind said arm(s), said rear guide part having an outline corresponding to the section of said hole.

8. A kit for performing eddy current inspection of a hole formed in a conductive part, **characterized in that** the kit comprises a plurality of inspection devices according to any one of the preceding claims, differing from one another by the positions of the hinged arms they carry relative to the section of the hole.
